(19) Europäisches Patentamt

European Patent Office

Office européen des brevets

(11) **EP 3 796 211 B1**

(12) **EUROPEAN PATENT SPECIFICATION**

(45) Date of publication and mention
of the grant of the patent:
**19.03.2025 Bulletin 2025/12**

(21) Application number: **19198420.2**

(22) Date of filing: **19.09.2019**

(51) International Patent Classification (IPC):
**G06F 18/2413** (2023.01)    **G06T 7/11** (2017.01)
**G06V 10/28** (2022.01)    **G06V 10/764** (2022.01)
**G06V 10/82** (2022.01)    **G06V 20/00** (2022.01)
**G06T 7/194** (2017.01)    **G06T 11/00** (2006.01)

(52) Cooperative Patent Classification (CPC):
**G06T 11/00; G06F 18/2413; G06T 7/11;**
**G06T 7/194; G06V 10/28; G06V 10/764;**
**G06V 10/82; G06V 20/00;** G06T 2207/20084;
G06V 20/56

(54) **DEVICE AND METHOD FOR TRAINING A SEGMENTATION MODEL**

VORRICHTUNG UND VERFAHREN ZUM TRAINIEREN EINES SEGMENTIERUNGSMODELLS

DISPOSITIF ET PROCÉDÉ D'APPRENTISSAGE D'UN MODÈLE DE SEGMENTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.03.2021 Bulletin 2021/12**

(73) Proprietor: **Robert Bosch GmbH**
**70442 Stuttgart (DE)**

(72) Inventor: **Noroozi, Mehdi**
**70839 Gerlingen (DE)**

(56) References cited:
• **XINMING ZHANG ET AL: "A novel framework for
semantic segmentation with generative
adversarial network", INTERNET MULTIMEDIA
COMPUTING AND SERVICE, ACM, 2 PENN
PLAZA, SUITE 701NEW
YORKNY10121-0701USA, 17 August 2018
(2018-08-17), pages 1 - 6, XP058415622, ISBN:
978-1-4503-6520-8, DOI: 10.1145/
3240876.3240891**

• **ZHANG XINMING ET AL: "SegGAN: Semantic
Segmentation with Generative Adversarial
Network", 2018 IEEE FOURTH INTERNATIONAL
CONFERENCE ON MULTIMEDIA BIG DATA
(BIGMM), IEEE, 13 September 2018 (2018-09-13),
pages 1 - 5, XP033424054, DOI: 10.1109/
BIGMM.2018.8499105**

• **LIN CHEN-HSUAN ET AL: "ST-GAN: Spatial
Transformer Generative Adversarial Networks
for Image Compositing", 2018 IEEE/CVF
CONFERENCE ON COMPUTER VISION AND
PATTERN RECOGNITION, IEEE, 18 June 2018
(2018-06-18), pages 9455 - 9464, XP033473872,
DOI: 10.1109/CVPR.2018.00985**

• **FANGNENG ZHAN ET AL: "Spatial Fusion GAN
for Image Synthesis", ARXIV.ORG, CORNELL
UNIVERSITY LIBRARY, 201 OLIN LIBRARY
CORNELL UNIVERSITY ITHACA, NY 14853, 14
December 2018 (2018-12-14), XP080993082**

• **REMEZ TAL ET AL: "Learning to Segment via
Cut-and-Paste", 6 October 2018, SAT 2015 18TH
INTERNATIONAL CONFERENCE, AUSTIN, TX,
USA, SEPTEMBER 24-27, 2015; [LECTURE
NOTES IN COMPUTER SCIENCE; LECT.NOTES
COMPUTER], SPRINGER, BERLIN,
HEIDELBERG, PAGE(S) 39 - 54, ISBN:
978-3-540-74549-5, XP047488262**

**EP 3 796 211 B1**

**Description**

Various embodiments generally relate to a device and a method for training a segmentation model.

By way of example, for autonomous driving, imaging sensors, such as camera sensors and/or video sensors, may be used to provide digital images of the surroundings of a vehicle. The digital images may illustrate objects, such as cars, bicycles, pedestrians, street signs etc., and may be segmented and classified by semantic segmentation using a segmentation model and the vehicle may be controlled depending on the segmented and classified digital images. Thus, for safety reasons, it is necessary that the segmentation model is capable of providing segments for the objects in the digital image with sharp boundaries.

Various models, such as neural networks, are applied in the field of computer vision. By way of example, neural networks may be used to generate a segmented image using an image detected by an imaging sensor. However, a segment of the segmented image may also include pixels not belonging to an object shown in the detected image. Thus, it may be necessary to provide a model capable of generating a segmented image for a detected image with sharp object boundaries of the segmented objects.

In Arandjelovic et al., Object Discovery with a Copy-Pasting GAN, arXiv:1905.11369, 2019, a generative adversarial network is described, wherein a segmented part of an image is copied to another image.

Exemplary training methods are disclosed in XINMING ZHANG ET AL. "A novel framework for semantic segmentation with generative adversarial network", INTERNET MULTIMEDIA COMPUTING AND SERVICE, ACM, 2 PENN PLAZA, SUITE 701 NEW YORKNY10121-0701USA, 17 August 2018, pages 1-6; in ZHANG XINMING ET AL.: "SegGAN: Semantic Segmentation with Generative Adversarial Network", 2018 IEEE FOURTH INTERNATIONAL CONFERENCE ON MULTIMEDIA BIG DATA (BIGMM), IEEE, 13 September 2018, pages 1-5; in LIN CHEN-HSUAN ET AL: "ST-GAN: Spatial Transformer Generative Adversarial Networks for Image Compositing", 2018 IEEE/CVF CONFERENCE ON COMPUTER VISION AND PATTERN RECOGNITION, IEEE, 18 June 2018, pages 9455-9464; in FANGFENG ZHAN ET AL: "Spatial Fusion GAN for Image Synthesis" ARXIV.ORG, CORNELL UNIVERSITY LIBRARY, 201 ONLIN LIBRARY CORNELL UNIVERSITY ITHACA, NY 14853, 14 December 2018; and in REMEZ TAL ET AL: "Learning to Segment via Cut-and-Paste", 6 October 2018, SAT 2015 18TH INTERNATIONAL CONFERENCE, AUSTIN, TX, USA, SEPTEMBER 24-27, 2015.

According to the present invention, a method defined in claim 1, a training device defined in claim 2, systems defined in claims 3 , and a vehicle defined in claim 4 are provided.

The method and the device enable a model to be trained to generate a segmented image for a digital image with improved object boundaries of a segmented object.

A model may be any kind of algorithm, which provides output data for input data. A model may be a differential model. For example, a model may be a neural network.

The segmentation image may be a binary segmentation image. The segmentation image may include a first binary value "1" for the segment and a second binary value "0" for the background.

The digital image may be a color image, for example an RGB image.

Determining a predictability of the digital image from the segment of the segmentation image may include generating a segment of the digital image using the segment of the segmentation image and the digital image. Determining a predictability of the digital image from the segment of the segmentation image may further include determining a predictability of the digital image from the segment of the digital image. The segmentation model may be trained to reduce, for example to minimize, the predictability of the digital image from the segment of the digital image. Thus, the pixels of the segment of the digital image share higher level of abstractions that are more independent of the other pixels. This has the effect that the segmentation method is trained unsupervised, i.e. using digital images only and no human supervision.

Determining a predictability of the digital image from the segment of the digital image may include a generative model generating a reconstructed digital image for the segment of the digital image. The reconstructed digital image may be a prediction of the digital image. The segmentation model may be trained to increase the difference between the reconstructed digital image and the digital image. For example, training the segmentation model to increase the difference between the reconstructed digital image and the digital image may include determining a first loss value by comparing the reconstructed digital image with the digital image and the segmentation model may be trained by increasing, for example maximizing, the first loss value.

The method may further include training the generative model by reducing, for example minimizing, the first loss value.

Determining a predictability of the digital image from the segment of the digital image may include a generative model generating a reconstructed digital image for the segment of the digital image. The reconstructed digital image may be a prediction of the digital image. Determining a predictability of the digital image from the segment of the digital image may further include a discriminative model determining a probability for the reconstructed digital image to belong to a class including the digital image. The segmentation model may be trained to increase the probability determined by the discriminative model. For example, training the segmentation model to increase the probability determined by the discriminative model may include determining a second loss value using the probability determined by the discriminative model and the segmentation model may be trained by increasing, for example maximizing, the second loss value.

The method may further include training the generative model by reducing, for example minimizing, the second loss value.

The method may further include training the discriminative model by increasing, for example maximizing, the second loss value.

Determining a predictability of the digital image from the segment of the segmentation image may include determining a predictability of the background of the segmentation image from the segment of the segmentation image. The segmentation model may be trained to reduce, for example to minimize, the predictability of the background of the segmentation image from the segment of the segmentation image.

The method may further include generating a background of the digital image for the background of the segmentation image using the digital image. Determining a predictability of the background of the segmentation image from the segment of the segmentation image may include determining a predictability of the background of the digital image from the segment of the digital image. The segmentation model may be trained to reduce, for example to minimize, the predictability of the background of the digital image from the segment of the digital image.

Determining a predictability of the background of the digital image from the segment of the digital image includes generating a background of an additional digital image using the background of the segmentation image and the additional image. Determining a predictability of the background of the digital image from the segment of the digital image includes generating a combined digital image for the segment of the digital image and the background of the additional digital image. Determining a predictability of the background of the digital image from the segment of the digital image includes a discriminative model determining a probability for the combined digital image to belong to a class including the digital image and/or the additional digital image. The segmentation model is trained to increase the probability determined by the discriminative model.

For example, training the segmentation model to increase the probability determined by the discriminative model may include determining a third loss value using the probability determined by the discriminative model and the segmentation model may be trained by increasing, for example maximizing, the third loss value. This has the effect that the segmentation model is trained to segment regions such that if they are pasted to an additional image, the combined image looks like a realistic sensor-detected image. Thus, the segmentation model provides segments that are independent of the background of the segments.

The method may further include training the discriminative model by reducing, for example minimizing, the third loss value.

The method may further include a sensor detecting the digital image.

The sensor may include a camera sensor, a video sensor, a radar sensor, a LiDAR sensor, an ultrasonic sensor, a motion sensor, or a thermal sensor.

The digital image may include a plurality of objects. The segmentation model may generate a segmentation image for each object of the plurality of objects, wherein each segmentation image may include a segment describing the object. The method may be performed for each segmentation image of the plurality of segmentation images.

At least a part of the segmentation model may be implemented by one or more processors.

The segmentation model may be a neural network.

The method may further include the trained segmentation model generating training data.

The method may include training an additional model using the training data.

A computer program product may store program instructions configured to, if executed, perform the method of any one of the first example to the twentieth example.

A system may include a device of the twenty-second example or the twenty-third example. The system may further include at least one sensor. The at least one sensor may be configured to provide a digital image for the device.

A system may include a generative adversarial network (GAN). The GAN may include a plurality of generator networks, wherein at least one generator network of the plurality of generator networks may include the segmentation model trained by the method of any one of the first example to the nineteenth example.

A system may include a generative adversarial network (GAN). The GAN may include a plurality of generator networks, wherein at least one generator network of the plurality of generator networks may include the additional model trained by the method of the twentieth example.

A vehicle includes at least one imaging sensor, configured to provide digital images.

The vehicle includes a driving assistance system. The driving assistance system includes a segmentation model trained by the method of claim 1 The segmentation model is configured to provide a segmentation image for each digital image. The driving assistance system is configured to control the vehicle using the segmentation images. Thus, the vehicle is capable of detecting surrounding objects in an improved manner. In other words, the trained segmentation model is capable to provide segmented images with sharp object boundaries improving the classification of the segmented objects and thus the control of the vehicle.

Various embodiments of the invention are described with reference to the following drawings, in which:

Figure 1     show a device according to various embodiments;
Figure 2     shows a processing system for training a segmentation model according to various embodiments;
Figure 3     shows a processing system for training a segmentation model according to various embodiments;
Figure 4     shows a processing system for training a segmentation model according to various embodiments;
Figure 5     shows a processing system for training a segmentation model according to various embodiments;
Figure 6     shows a processing system for training a segmentation model according to various embodiments;
Figure 7     shows a processing system for training a segmentation model according to various embodiments;
Figure 8     shows a method of training a segmentation model according to various embodiments;
Figure 9     shows a system including a segmentation model according to various embodiments;
Figure 10    shows a vehicle according to various embodiments.

In an embodiment, a "circuit" may be understood as any kind of a logic implementing entity, which may be hardware, software, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be software being implemented or executed by a processor, e.g. any kind of computer program, e.g. a computer program using a virtual machine code such as e.g. Java. Any other kind of implementation of the respective functions which will be described in more detail below may also be understood as a "circuit" in accordance with an alternative embodiment.

In the field of computer vision segmentation models are applied for image segmentation and various systems may be controlled based on the segmented images. However, segments of segmented images may also include pixels not belonging to an object shown in the processed image, which may result in an unwanted control of the respective system. Illustratively, a segmentation model is trained to provide a segmented image for a digital image, wherein the segments, which describe a respective object in the digital image, represent the object with sharp object boundaries.

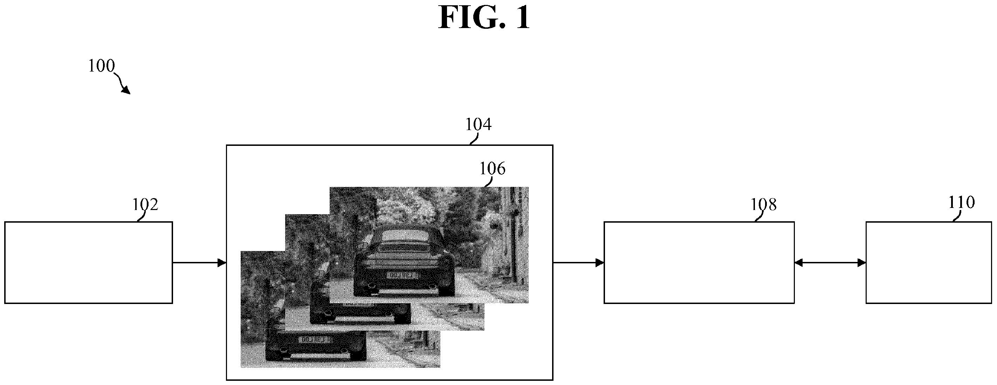

**FIG. 1** shows a device 100. The device 100 may include one or more sensors 102. The sensor 102 may be configured to provide (digital) images, for example a plurality of digital images 104 including the digital image 106. The sensor 102 may be any kind of sensor, which is capable of providing (digital) images, for example an imaging sensor, such as a camera sensor or a video sensor, a radar sensor, a LiDAR sensor, an ultrasonic sensor, a motion sensor, a thermal sensor, etc. The plurality of sensors may be of the same type of sensor or of different sensor types. The device 100 may further include a memory device 108. The memory device 108 may include a memory which is for example used in the processing carried out by a processor. A memory used may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory). The memory device 108 may be configured to store the plurality of digital images 104, such as the digital image 106, provided by the one or more sensors 102. The device 100 may further include at least one processor 110. The at least one processor 110 may be any kind of circuit, i.e. any kind of logic implementing entity, as described above. In various embodiments, the processor 110 may be configured to process the digital image 106.

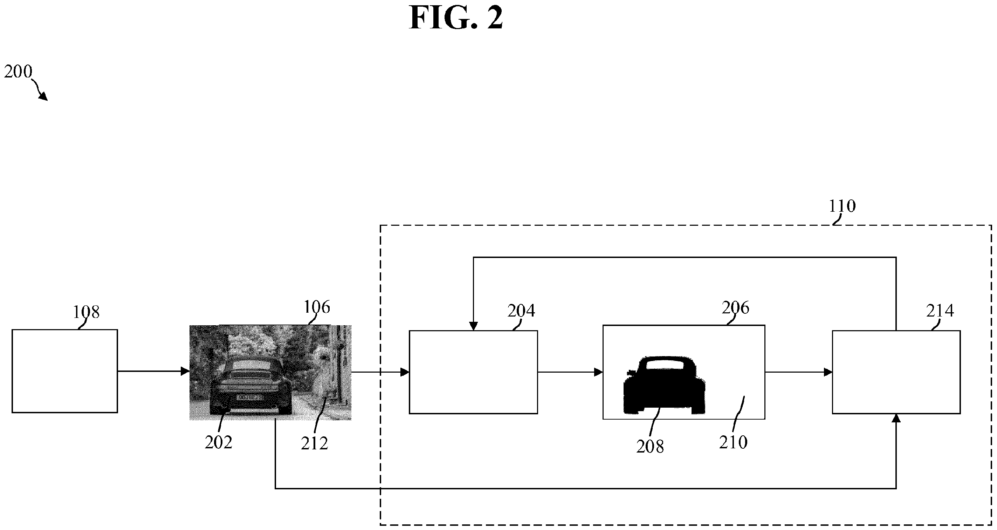

**FIG. 2** shows a processing system 200 for training a segmentation model.

The processing system 200 may include the memory device 108. The memory device 108 may store the digital image 106. The digital image 106 may include at least one object 202. The processing system 200 may further include the at least one processor 110. The processor 110 may be configured to process the digital image 106. The processor 110 may be configured to implement at least a part of a segmentation model 204. The segmentation model 204 may be a neural network, wherein the neural network may be any kind of neural network, such as a convolutional neural network. The neural network may include any number of layers and the training of the neural network, i.e. adapting the layers of the neural network, may be based on any kind of training principle, such as backpropagation, i.e. the backpropagation algorithm.

The segmentation model 204 is configured to process the digital image 106 and is further configured to generate a segmentation image 206 for the digital image 106. The segmentation image 206 include a segment 208 describing the at least one object 202 in the digital image 106. The segmentation image 206 further includes a background 210 of the segment 208. In other words, the segmentation image 206 includes a segment 208, which describes at least one object 202 in the digital image, and a background 210, which describes a background 212 of the at least one object 202 in the digital image. The digital image 106 may be a color image (for example RGB) and the segmentation image 206 may be a binary image. The segmentation image 206 may include a first binary value "1" for the segment 208 and a second binary value "0" for the background 210 or may include a first binary value "0" for the segment 208 and a second binary value "1" for the background 210. In other words, the digital image 106 and the segmentation image 206 each include a plurality of pixels, wherein the segment 208 of the segmentation image 206 includes a first plurality of pixels associated to a first plurality of pixels in the digital image 106, wherein the first plurality of pixels in the digital image 106 describe the at least one object 202 in the digital image 106. The background 210 of the segmentation image 206 includes a second plurality of pixels associated to a second plurality of pixels in the digital image 106, wherein the second plurality of pixels in the digital image 106 describe the background of the at least one object 202 in the digital image 106. Thus, for example, the segment 208 described by the first plurality of pixels in the segmentation image 206 may include the first binary value "1" and the background 210 described by the second plurality of pixels in the segmentation image 206 may include the second binary value "0".

The processor 110 is be further configured determine a predictability 214 of the digital image 106 from the segment 208 of the segmentation image 206. The processor 110 is be configured to adapt, i.e. to train, the segmentation model 204 to reduce, for example to minimize, the predictability 214 of the digital image 106 from the segment 208 of the segmentation image 206.

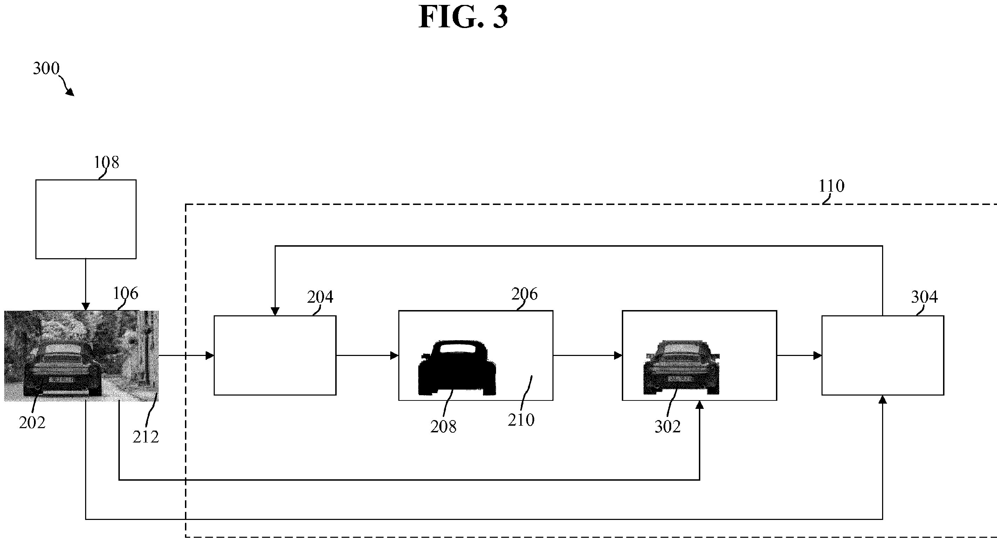

FIG. 3 shows a processing system 300 for training a segmentation model.

The processing system 300 may correspond substantially to the processing system 200, wherein the processor 110 is further configured to generate a segment 302 of the digital image 106. The segment 302 of the digital image 106 may be generated using the segment 208 of the segmentation image 206 and the digital image 106. The segment 302 ($S(X) \odot X$) of the digital image 106 may be determined by the Hadamard product of the segmentation image 206 ($S(x)$) for the digital image 106 and the digital image 106 (X), wherein the digital image 106 may be a color image and wherein the segmentation image 206 may include a first binary value "1" for the segment 208 and a second binary value "0" for the background 210. In other words, the segmentation image 206 may include a first binary value "1" for the pixels associated to the segment 208 and a second binary value "0" for the pixels associated to the background 210. Illustratively, the segmentation image 206 may be used as a mask and the segment 302 of the digital image 106 may be a part cut out of the digital image. The processor 110 may be further configured to determine a predictability 304 of the digital image 106 from the segment 302 of the digital image 106. The predictability 304 of the digital image 106 from the segment 302 of the digital image 106 may be determined by equation (1):

$$\mathcal{P}(S(X) \odot X; X) \qquad (1)$$

The processor 110 may be configured to train the segmentation model 204 by reducing, for example minimizing, the predictability 304 of the digital image 106 from the segment 302 of the digital image 106, wherein the training may include the objective function given by equation (2):

$$\min_{S} \mathcal{P}(S(X) \odot X; X) \qquad (2)$$

wherein $S$ is the segmentation model 204 generating the segmentation image 206 $S(X)$ for the digital image 106 $X$.

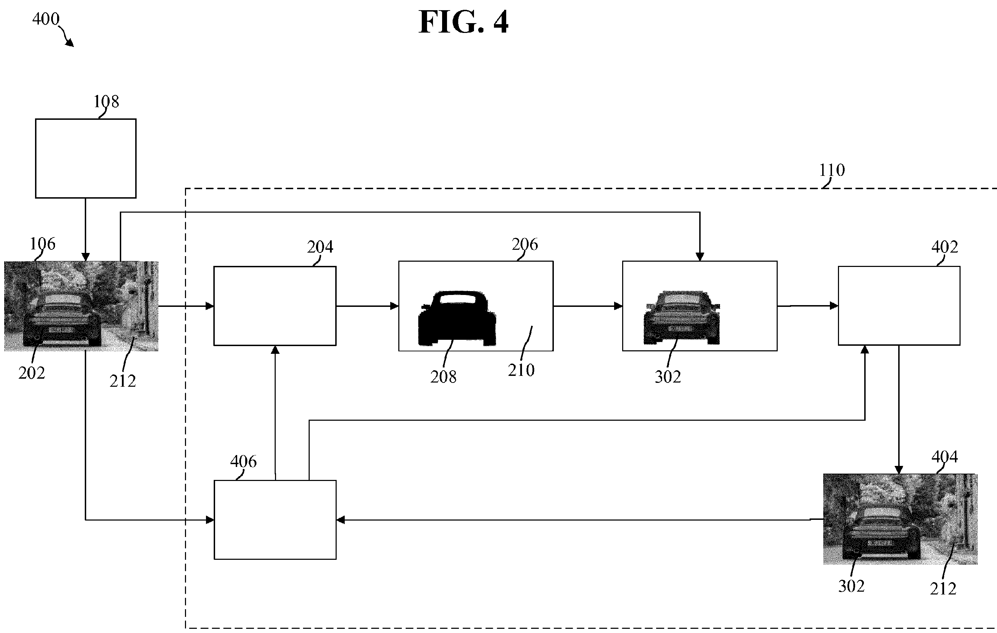

FIG. 4 shows a processing system 400 for training a segmentation model.

The processing system 400 may correspond substantially to the processing system 300, wherein the processor 110 may be further configured to implement at least a part of a generative model 402. The generative model 402 may be a neural network, for example a generator. The generative model 402 may be configured to process the segment 302 of the digital image 106. The generative model 402 may be configured to generate a reconstructed digital image 404 for the segment 302 of the digital image 106. The reconstructed digital image 404 may be a prediction of the digital image 106. In other words, the generative model 402 may presume a background 212 of the digital image 106 using the segment 302 of the digital image 106 to reconstruct the digital image 106. In even other words, the generative model 402 may be an Inpainter model generating a background of the segment 302 of the digital image 106. The processor 110 may be configured to determine a first loss value 406 by comparing the reconstructed image 404 with the digital image 106. The first loss value 406 may be determined by a mean square error (MSE). Thus, MSE may be used as quantification of the predictability 304 of the digital image 106 from the segment 302 of the digital image 106. The first loss value 406 ($L_1$) may be determined by equation (3):

$$L_1 = \mathbb{E}_{X \sim \mathbb{P}_r} ||G(S(X) \odot X) - X||_2^2 \qquad (3)$$

wherein $S$ is the segmentation model 204 and $G$ is the generative model 402.

The processor 110 may be further configured to train the segmentation model 204 by increasing, for example maximizing, the first loss value 406. The processor 110 may be configured to train the generative model 402 by reducing, for example minimizing, the first loss value 406. Thus, the predictability 304 of the digital image 106 from the segment 302 of the digital image 106 is reduced, for example minimized, by increasing, for example maximizing, the first loss value 406. In other words, the generative model 402 may be trained to reduce, for example minimize, the loss between a generated reconstructed digital image 404 and the digital image 106, and the segmentation model 204 may be trained to increase, for example maximize, the loss between a generated reconstructed digital image 404 and the digital image 106. Illustratively, the quality of the segment 208 of the segmentation image 206 generated by the segmentation model 204 is improved by generating a segmentation image 206 for which the generative model 402 fails to reconstruct the digital image 106 from the segment 302 of the digital image 106. In other words, a part of the digital image 106, for example the background 212 of the digital image 106, may be hidden such that the generative model 402 fails to reconstruct the digital image 106. Thus, the generative model 402 may fail to reconstruct the digital image 106 from the segment 302 of the digital image 106, if the segment 208 generated by the segmentation model 204 includes sharp object boundaries. In other words, the generative model 402 may fail to reconstruct the digital image 106 from the segment 302 of the digital image 106, if the segment 208 generated by the segmentation model 204 includes the pixels associated to the at least one object 202 in the digital image 106 and does not include pixels associated to the background 212 of the digital image 106.

The objective function for training the segmentation model 204 (S) and the generative model 402 (G) may be described by equation (4):

$$\max_{S} \min_{G} \mathbb{E}_{X \sim \mathbb{P}_r} ||G(S(X) \odot X) - X ||_2^2 \qquad (4)$$

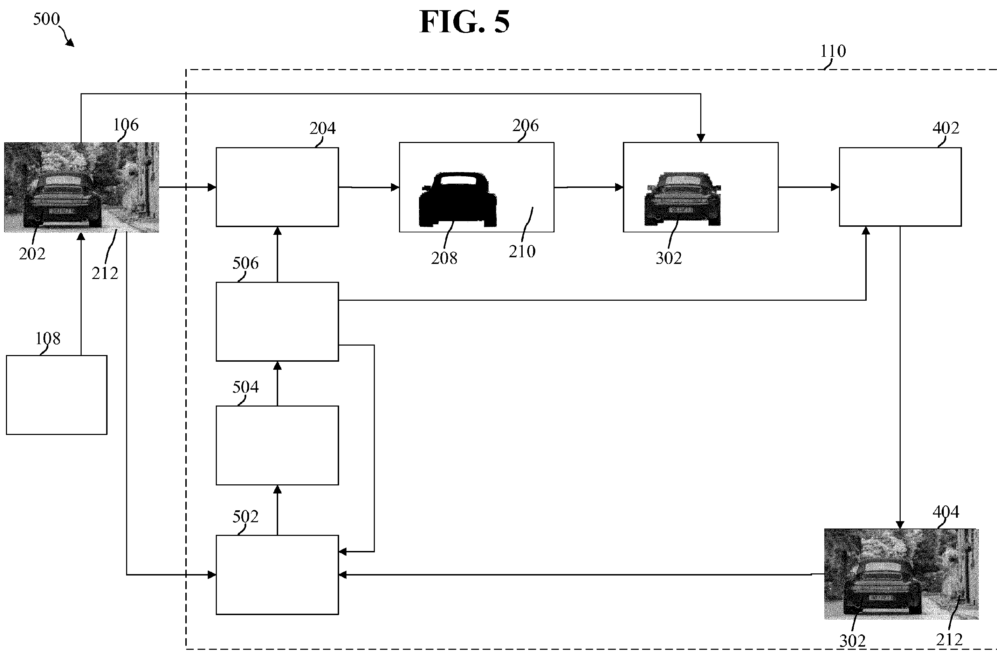

**FIG. 5** shows a processing system 500 for training a segmentation model.

The processing system 500 may correspond substantially to the processing system 300, wherein the processor 110 may be further configured to implement at least a part of the generative model 402 and may be configured to implement at least a part of a discriminative model 502. The discriminative model 502 may be a neural network, for example a discriminator. The generative model 402 may be configured to process the segment 302 of the digital image 106. The generative model 402 may be configured to generate a reconstructed digital image 404 for the segment 302 of the digital image 106, wherein the reconstructed digital image 404 may be a prediction of the digital image 106. The discriminative model 502 may be configured to determine a probability 504 for the reconstructed digital image 404 to belong to a class including the digital image 106. In other words, the discriminative model may include a first class and the first class may include the digital image 106. The discriminative model 502 may further include a second class, wherein the second class may include at least one image generated by a generative model, such as the generative model 402. Thus, the first class may be associated to "real" images, such as sensor-detected images, and the second class may be associated to "fake" images, such as generated images. Illustratively, the discriminative model 502 may be configured to determine a probability of the reconstructed digital image 404 to be a "real" image, i.e. a sensor-detected image. Thus, the processing system 500 may include a generative adversarial network (GAN), including the generative model 402 and the discriminative model 502. The objective function of a GAN may be described by equation (5):

$$\min_{G} \max_{D} \mathbb{E}_{X \sim \mathbb{P}_r}[logD(X)] + \mathbb{E}_{Z \sim \mathbb{P}_z}[\log (1 - D(G(Z)))] \qquad (5)$$

wherein $D$ is a discriminative model, wherein $\mathbb{P}_r$ is the distribution of the "real" image, for example the digital image 106, and wherein $\mathbb{P}_z$ is a random distribution.

Considering an optimal discriminative model D*, a loss (L(D*, G)) for the optimal discriminative model and the generative model may be described by equation (6):

$$L(D^*, G) = JSD(\mathbb{P}_r || \mathbb{P}_g) - 2log2 \qquad (6)$$

wherein *JSD* is the Jensen-Shannon-Divergence, and wherein $\mathbb{P}_g$ is the distribution of a generated image, for example the reconstructed digital image 404.

The generative model 402 may be configured to generate the reconstructed digital image 404 for the segment 302 of the digital image 106. Thus, $\mathbb{P}_g$ may determine, for example approximate, $P_g(X|S(X)\odot X)$ by reducing, for example minimizing, equation (6), wherein $JSD(\mathbb{P}_r(X) || \mathbb{P}_g(X|S(X)\odot X))$ is reduced, for example minimized, for sharp object boundaries of the segment 302 of the digital image 106 generated using the segment 208 of the segmentation image 206, wherein *JSD* may be considers as quantification of the predictability 304 of the digital image 106 from the segment 302 of the digital image 106. Thus, relative entropy may be used as quantification of the predictability 304 of the digital image 106 from the segment 302 of the digital image 106. According to various embodiments, equation (6) is reduced, for example minimized, if the segmentation model 204 generates the segment 208 of the segmentation image 206 with sharp object boundaries. Illustratively, the generative model fails to reconstruct the digital image 106 from the segment 302 of the digital image for a segment 208 of the segmentation image 206 with sharp object boundaries. The processor 110 may be configured to determine a second loss value 506 using the probability 504 determined by the discriminative model 502. The second loss value 506 ($L_2$) may be determined by equation (7):

$$L_2 = \mathbb{E}_{X \sim \mathbb{P}_r}[logD(X)] + \mathbb{E}_{X \sim \mathbb{P}_r}[\log{(1 - D(G(S(X)\odot X)))}] \qquad (7)$$

The processor 110 may be further configured to train the segmentation model 204 by increasing, for example maximizing, the second loss value 506. As described above, the predictability 304 of the digital image 106 from the segment 302 of the digital image 106 is reduced, for example minimized, by training the segmentation model 204 to increase, for example maximize, the second loss value 506. The processor 110 may be configured to train the generative model 402 by reducing, for example to minimize, the second loss value 506. The second loss value 506 may be minimized using the log$D$ trick. The predictability 304 of the digital image 106 from the segment 302 of the digital image 106 may be determined using the Wasserstein distance. The processor 110 may be further configured to train the discriminative model 502 by increasing, for example maximizing, the second loss value 506. In other words, the generative model 402 may be trained to generate a reconstructed digital image 404 from the segment 302 of the digital image 106 for which the discriminative model 502 determines a high probability 504 to belong to the first class associated with "real" images; the discriminative model 502 may be trained to determine a low probability 504 for the reconstructed digital image 404 to belong to the first class; and the segmentation model 204 may be trained to generate a segmentation image 206 for which the discriminative model 502 determines a low probability 504 for the reconstructed digital image 404 to belong to the first class.

Hence, the objective function for training the segmentation model 204 ($S$), the generative model 402 ($G$) and the discriminative model 502 ($D$) may be described by equation (8):

$$\max_S \min_G \max_D \mathbb{E}_{X \sim \mathbb{P}_r}[logD(X)] + \mathbb{E}_{X \sim \mathbb{P}_r}[\log{(1 - D(G(S(X)\odot X)))}] \qquad (8)$$

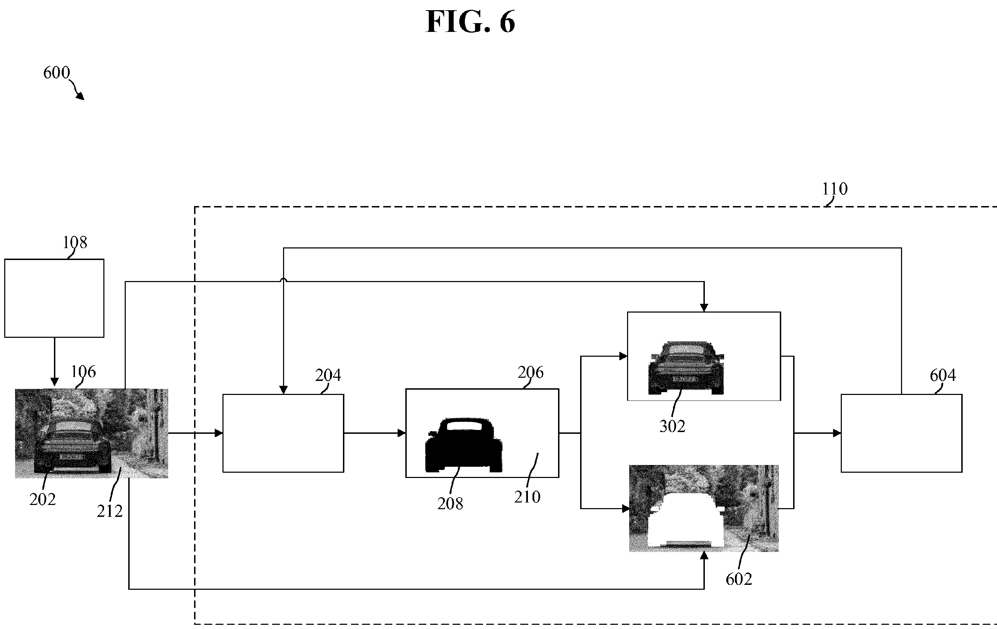

**FIG. 6** shows a processing system 600 for training a segmentation model.

The processing system 600 may correspond substantially to the processing system 300, wherein the processor 110 may be further configured to generate a background 602 of the digital image 106. The background 602 of the digital image 106 may be generated using the background 210 of the segmentation image 206 and the digital image 106. The background 602 of the segment 302 ($S(X)\odot X$) of the digital image 106 may be determined by the Hadamard product of the segmentation image 206 ($S(x)$) for the digital image 106 and the digital image 106 ($X$), wherein the digital image 106 may be a color image and wherein the segmentation image 206 may include a first binary value "0" for the segment and a second binary value "1" for the background. In other words, the background 602 may be described by 1-$S(X)$ for a first binary value "1" for the segment and a second binary value "0" for the background. In even other words, for 1-$S(X)$, the pixels associated to the background 210 of the segmentation image 206 may include the first binary value "1" and the pixels associated to the segment 208 of the segmentation image 206 may include the second binary value "0". Thus, the background 602 of the digital image 106 may be described by 1-$S(X)\odot X$. Illustratively, the segmentation image 206 may be used as a mask and the background 602 of the digital image 106 may be a part cut out of the digital image 106.

The processor 110 may be further configured determine a predictability 604 of the background 602 of the digital image 106 from the segment 302 of the digital image 106. The predictability 604 of the background 602 of the digital image 106 from the segment 302 of the digital image 106 may be determined by equation (9):

$$\mathcal{P}(S(X)\odot X; (1\text{-}S(X))\odot X) \qquad (9)$$

The processor 110 is configured to train the segmentation model 204 by reducing, for example minimizing, the predictability 304 of the background 602 of the digital image 106 from the segment 302 of the digital image 106, wherein the training may be described by the objective function given by equation (10):

$$\min_S \mathcal{P}(S(X)\odot X; 1\text{-}S(X))\odot X) \qquad (10)$$

The predictability 604 of the background 602 of the digital image 106 from the segment 302 of the digital image 106 is quantified by the mutual information ($I$) of the background 602 of the digital image 106 and the segment 302 of the digital image 106 and may be determined by equation (11):

$$\min_{S} I(S(X)\odot X; (1 - S(X))\odot X) \qquad (11)$$

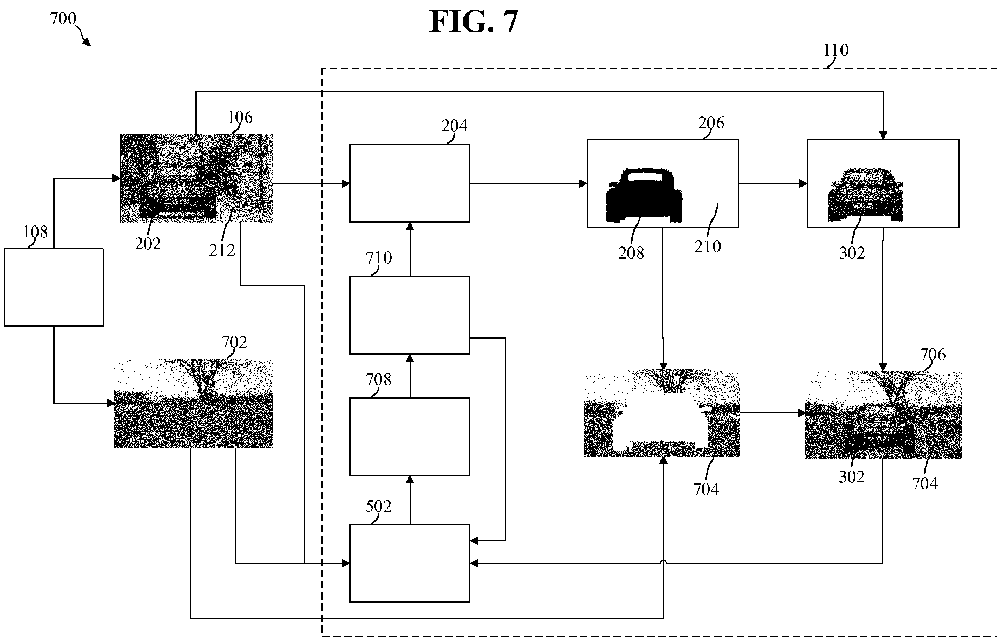

**FIG. 7** shows a processing system 700 for training a segmentation model according to an embodiment. The processing system 700 may include the memory device 108. The memory device 108 may store the digital image 106. The memory device 108 may further store an additional digital image 702. The additional digital image 702 may be provided by the one or more sensors 102. The additional digital image 702 may have the same dimensions, i.e. the same resolution, as the digital image 106. The processing system 700 may further include the at least one processor 110. The processor 110 may be configured to implement at least a part of the segmentation model 204, wherein the segmentation model 204 is configured to generate the segmentation image 206 for the digital image 106. The processor 110 is configured to generate the segment 302 of the digital image 106 using the segmentation image 206 and the digital image 106.

The processor 110 is further configured to generate a background 704 of the additional digital image 702. The processor 110 is configured to generate the background 704 of the additional digital image 702 using the background 210 of the segmentation image 206 and the additional digital image 702. The background 210 of the segmentation image 206 may be described by $(1-S(X))\odot X$, wherein the pixels associated to the background 210 of the segmentation image 206 include the first binary value "1" and wherein the pixels associated to the segment 208 of the segmentation image 206 include the second binary value "0". The background 704 of the additional image 702 is determined by the Hadamard product of the background 210 of the segmentation image 206 $(1-S(X))$ and the additional digital image 702, wherein the additional digital image 702 may be described by $Y$. Thus, the background 704 of the additional digital image 702 may be described by $(1-S(X))\odot Y$. Illustratively, the segmentation image 206 may be a mask and the background 704 of the digital image 106 may be a part cut out of the additional digital image 702 using the mask.

The processor 110 is further configured to generate a combined digital image 706.

The processor 110 is configured to generate the combined digital image 706 using the segment 302 of the digital image 106 and the background 704 of the additional digital image 702. In other words, the combined digital image 706 includes the pixels of the digital image 106 associated to the segment 208 describing the at least one object 202 and includes the pixels of the additional digital image 702 associated to the background 704 of the additional digital image 702. Illustratively, the segment 302 of the digital image 106 may be a first part cut out of the digital image 106 using the segmentation image 206 and the background 704 of the additional digital image 702 may be a second part cut out of the additional digital image 702 using the segmentation image 206. In other words, each pixel of the plurality of pixels of the combined digital image 706 may be either associated to the digital image 106 or to the additional digital image 702. The processor 110 may be configured to implement at least a part of the discriminative model 502. The discriminative model 502 is configured to determine a probability 708 for the combined digital image 706 to belong to a class including the digital image 106 and/or the additional digital image 702. In other words, the discriminative model 502 may include a first class and the first class may include the digital image 106 and/or the additional digital image 702. The discriminative model 502 may further include a second class, wherein the second class may include at least one image generated by a generative model. Thus, the first class may be associated to "real" images, such as sensor-detected images, and the second class may be associated to "fake" images, such as generated images. Illustratively, the discriminative model 502 may be configured to determine a probability 708 of the combined digital image 706 to be a "real" image, i.e. a sensor-detected image. The processor 110 may be configured to determine a third loss value 710 using the probability 708 determined by the discriminative model 502. The third loss value 710 ($L_3$) may be determined by equation (12):

$$L_3 = \mathbb{E}_{X\sim\mathbb{P}_r}[logD(X)] + \mathbb{E}_{X,Y\sim\mathbb{P}_r}[\log\big(1 - D\big(S(X)\odot X + \big(1 - S(X)\big)\odot Y\big)\big)] \qquad (12)$$

The processor 110 is further configured to train the segmentation model 204 by increasing, for example maximizing, the third loss value 710. As described above, the predictability 604 of the background 602 of the digital image 106 from the segment 302 of the digital image 106 may be quantified by the mutual information ($I$) of the background 602 of the digital image 106 and the segment 302 of the digital image 106. The mutual information of the background 602 of the digital image 106 and the segment 302 of the digital image 106 and thus the predictability 604 of the background 602 of the digital image 106 from the segment 302 of the digital image 106 may be reduced, for example minimized, by generating a combined digital image 706 for which the discriminative model 502 determines a high probability 708 to belong to the first class associated with "real" images. Thus, the segmentation model 204 may be trained by reducing, for example minimizing, the third loss value 710. The discriminative model 502 may be trained to determine a low probability 708 for the combined digital image 706 to belong to the first class. Thus, the discriminative model 502 may be trained by increasing, for example maximizing, the third loss value 710.

Hence, the objective function for training the segmentation model 204 ($S$) and the discriminative model 502 ($D$) may be described by equation (13):

$$\max_{S} \min_{D} \mathbb{E}_{X \sim \mathbb{P}_r} [logD(X)] + \mathbb{E}_{X,Y \sim \mathbb{P}_r}[\log (1 - D(S(X) \odot X + (1 - S(X)) \odot Y))] \quad (13)$$

Training the segmentation model 204 by increasing, for example maximizing, the third loss value 710 has the effect that the segment 208 of the segmentation image 206 generated by the segmentation model 204 includes sharp object boundaries. In other words, the segment 208 of the segmentation image 206 includes the pixels associated to the at least one object 202 in the digital image 106 and does not include pixels associated to the background 212 of the digital image 106.

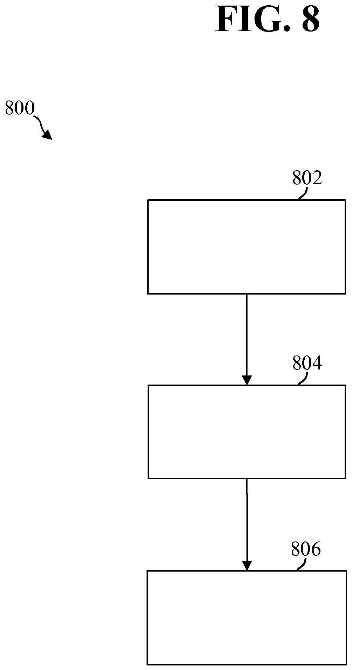

FIG. 8 shows a method 800 of training a segmentation model.

The method 800 may include the segmentation model 204 generating a segmentation image 206 for the digital image 106 (in 802). The segmentation image 206 may include a segment 208 describing at least one object 202 in the digital image 106. The method 800 may further include determining a predictability 212 of the digital image 106 from the segment 208 in the segmentation image 206 (in 804). The method 800 may include training the segmentation model 204 to reduce, for example to minimize, the predictability 212 of the digital image 106 from the segment 208 of the segmentation image 206 (in 806).

The method 800 may include generating a segment 302 of the digital image 106 using the segment 208 of the segmentation image 206 and the digital image 106. The method 800 may include determining a predictability 304 of the digital image 106 from the segment 302 of the digital image 106. The method 800 may include training the segmentation model 204 to reduce, for example to minimize, the predictability 304 of the digital image 106 from the segment 302 of the digital image 106.

The method 800 may include generating a background 602 of the digital image 106 using the segmentation image 206 and the digital image 106. The method 800 may include determining a predictability 604 of the background 602 of the digital image 106 from the segment 302 of the digital image 106. The method 800 may include training the segmentation model 204 to reduce, for example to minimize, the predictability 604 of the background 602 of the digital image 106 from the segment 302 of the digital image 106.

The digital image 106 may include a plurality of objects and the method 800 may be performed for each object of the plurality of objects. The digital image 106 may be processed by the processing system 400, the processing system 500 and/or the processing system 700, wherein the segmentation model 204 may generate a segmentation image 206 for each object of the plurality of objects in the digital image. In other words, each segmentation image 206 of the plurality of segmentation images generated by the segmentation model 204 for the plurality of objects may include a segment 208 describing one object of the plurality of objects in the digital image 106 and may further include a background 210 of the segment 208 for the associated object.

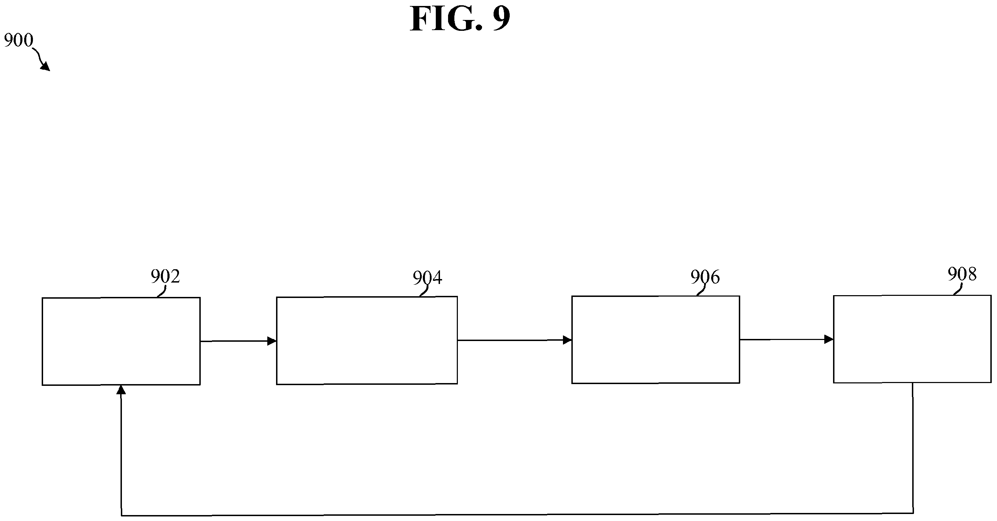

FIG. 9 shows a system 900 including a segmentation model.

The system 900 may include a first device 902. The first device 902 may be a computer-controlled device like a robot, a vehicle, a domestic appliance, a power tool, a manufacturing machine, a personal assistant, an access control system etc. The first device 902 may be a device for conveying information like a surveillance system or a medical (imaging) system. The system 900 may further include a sensor 904. The sensor 904 may be configured to detect digital images associated to the first device 902. The system 900 may include a second device 906. The second device 906 may be configured to process the digital images provided by the sensor 904. The second device 906 may include a segmentation model, such as the segmentation model 204. The second device 906 may be configured to perform the method 800 of training the segmentation model and may use the processing system 400, the processing system 500 and/or the processing system 700. The second device 906 may be configured to provide a segmentation image 206 for a digital image 106. The system 900 may further include a control device 908. The control device 908 may be configured to control the first device 902 using a segmentation image provided by the second device 906.

According to various embodiments, the second device 906 includes a trained segmentation model, such as the trained segmentation model 204, trained by the method 800 and the control device 908 may be configured to control the first device 902 using a segmentation image provided by the trained segmentation model.

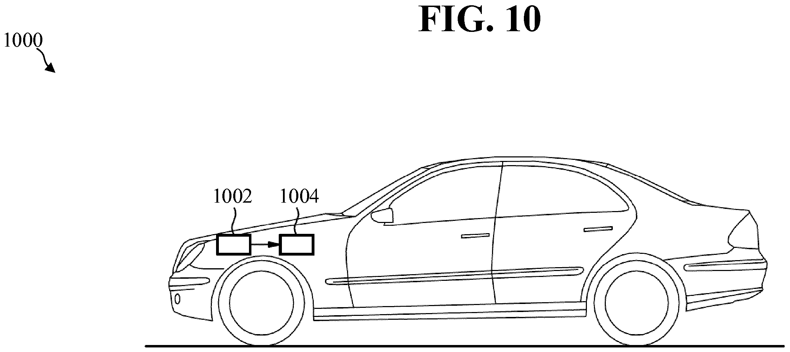

FIG. 10 shows a vehicle 1000.

The vehicle 1000 may be a vehicle with a combustion engine, an electric vehicle, a hybrid vehicle, or a combination thereof. Further, the vehicle 1000 may be a car, a truck, a ship, a drone, an aircraft or the like. The vehicle 1000 includes at least one sensor 1002. The sensor 1002 may be an imaging sensor, such as a camera sensor or a video sensor, wherein the sensor 1002 is configured to provide a plurality of digital images 104, such as the digital image 106, wherein each digital image may include at least one object 202. The vehicle 1000 includes a driving assistance system 1004. The driving assistance system 1004 may include the memory device 108. The driving assistance system 1004 may further include the at least one processor 110. The processor 110 may implement a segmentation model. The segmentation model is configured to process the plurality of digital images 104 provided by the sensor 1002 and to generate a plurality of segmentation images, such as the segmentation image 206, for the plurality of digital images 104, wherein each segmentation image may include a segment describing the at least one object 202 in the associated digital image. The segmentation model may be the trained segmentation model 204.

The segmentation model was trained such that the trained segmentation model is capable of providing segmentation images for digital images, wherein segments in a segmentation image describe objects in the associated digital image with sharp object boundaries. The driving assistance system 1004 is configured to control the vehicle 1000 using the processed plurality of digital images 104, i.e. using the generated plurality of segmentation images. In other words, the driving assistance system 1004 may be configured to process the plurality of digital images 104 and to output a control command to one or more actuators of the vehicle 1000 using the generated plurality of segmentation images. Thus, the driving assistance system 1004 may influence the current vehicle handling using the processed plurality of digital images 104, for example the current vehicle handling may be maintained or changed. Changing the current vehicle handling may be for example an intervention in the vehicle handling due to safety reasons, such as an emergency braking.

**Claims**

1. A method of computer-implemented training of a segmentation model, the method comprising:

   • the segmentation model processing a digital image to generate a segmentation image, the segmentation image comprising a segment associated with at least one object shown in the digital image and comprising a background of the segment, wherein the segment of the segmentation image comprises a first plurality of pixels associated with a first plurality of pixels in the digital image, wherein the first plurality of pixels of the digital image is associated with the at least one object, and wherein the background of the segment of the segmentation image comprises a second plurality of pixels associated with a second plurality of pixels in the digital image, wherein the second plurality of pixels of the digital image is associated with a background of the at least one object;
   • generating a background of the digital image using the background of the segmentation image and the digital image, wherein the background of the digital image comprises the second plurality of pixels of the digital image;
   • determining a predictability of the digital image from the segment of the segmentation image, comprising

     ◦ determining a predictability of the background of the digital image from the digital image segment of the digital image,
     ◦ wherein determining the predictability of the background of the digital image from the digital image segment of the digital image comprises:

       ▪ generating a background of an additional digital image using the background of the segmentation image and the additional digital image, wherein the background of the additional digital image comprises a third plurality of pixels in the additional digital image is determined by the Hadamard product of the segmentation image and the additional image;
       ▪ generating a combined digital image using the digital image segment of the digital image and the background of the additional digital image, wherein the combined digital image comprises the first plurality of the digital image and the third plurality of pixels of the additional digital image;
       ▪ a discriminative model determining a probability for the combined digital image to belong to a class comprising the digital image and the additional digital image;

   • training the segmentation model to increase the probability determined by the discriminative model.

2. A training device, configured to perform the method of claim 1.

3. A system, comprising:

   a device of claim 2;
   at least one sensor, configured to provide a digital image for the device.

4. A vehicle, comprising:

   at least one imaging sensor, configured to provide digital images;
   a driving assistance system, comprising a segmentation model trained by the method of claim 1, wherein the segmentation model is configured to provide a segmentation image for each digital image, and wherein the driving assistance system is configured to control the vehicle using the segmentation images.

**Patentansprüche**

1. Verfahren zum computerimplementierten Trainieren eines Segmentierungsmodells, wobei das Verfahren Folgendes umfasst:

   • Verarbeiten, durch das Segmentierungsmodell, eines digitalen Bildes, um ein Segmentierungsbild zu erzeugen, wobei das Segmentierungsbild ein Segment umfasst, das mit wenigstens einem Objekt assoziiert ist, das in dem digitalen Bild gezeigt ist, und einen Hintergrund des Segments umfasst, wobei das Segment des Segmentierungsbildes eine erste Mehrzahl von Pixeln umfasst, die mit einer ersten Mehrzahl von Pixeln in dem digitalen Bild assoziiert sind, wobei die erste Mehrzahl von Pixeln des digitalen Bildes mit dem wenigstens einen Objekt assoziiert ist und wobei der Hintergrund des Segments des Segmentierungsbildes eine zweite Mehrzahl von Pixeln umfasst, die mit einer zweiten Mehrzahl von Pixeln in dem digitalen Bild assoziiert sind, wobei die zweite Mehrzahl von Pixeln des digitalen Bildes mit einem Hintergrund des wenigstens einen Objekts assoziiert ist;
   • Erzeugen eines Hintergrunds des digitalen Bildes unter Verwendung des Hintergrunds des Segmentierungsbildes und des digitalen Bildes, wobei der Hintergrund des digitalen Bildes die zweite Mehrzahl von Pixeln des digitalen Bildes umfasst;
   • Bestimmen einer Vorhersagbarkeit des digitalen Bildes aus dem Segment des Segmentierungsbildes, umfassend

     ◦ Bestimmen einer Vorhersagbarkeit des Hintergrunds des digitalen Bildes aus dem Digitalbildsegment des digitalen Bildes,
     ◦ wobei das Bestimmen der Vorhersagbarkeit des Hintergrunds des digitalen Bildes aus dem Digitalbildsegment des digitalen Bildes Folgendes umfasst:

       ▪ Erzeugen eines Hintergrunds eines zusätzlichen digitalen Bildes unter Verwendung des Hintergrunds des Segmentierungsbildes und des zusätzlichen digitalen Bildes, wobei der Hintergrund des zusätzlichen digitalen Bildes eine dritte Mehrzahl von Pixeln in dem zusätzlichen digitalen Bild umfasst und durch das Hadamard-Produkt des Segmentierungsbildes und des zusätzlichen Bildes bestimmt wird;
       ▪ Erzeugen eines kombinierten digitalen Bildes unter Verwendung des Digitalbildsegments des digitalen Bildes und des Hintergrunds des zusätzlichen digitalen Bildes, wobei das kombinierte digitale Bild die erste Mehrzahl des digitalen Bildes und die dritte Mehrzahl von Pixeln des zusätzlichen digitalen Bildes umfasst;
       ▪ a ein diskriminatives Modell, das eine Wahrscheinlichkeit dafür bestimmt, dass das kombinierte digitale Bild zu einer Klasse gehört, die das digitale Bild und das zusätzliche digitale Bild umfasst;

   • Trainieren des Segmentierungsmodells, um die Wahrscheinlichkeit zu erhöhen, die durch das diskriminative Modell bestimmt wird.

2. Trainingsvorrichtung, die zum Durchführen des Verfahrens nach Anspruch 1 konfiguriert ist.

3. System, das Folgendes umfasst:

   eine Vorrichtung nach Anspruch 2;
   wenigstens einen Sensor, der zum Bereitstellen eines digitalen Bildes für die Vorrichtung konfiguriert ist.

4. Fahrzeug, das Folgendes umfasst:

   wenigstens einen Bildgebungssensor, der zum Bereitstellen digitaler Bilder konfiguriert ist;
   ein Fahrassistenzsystem, das ein Segmentierungsmodell umfasst, das durch das Verfahren nach Anspruch 1 trainiert wird, wobei das Segmentierungsmodell zum Bereitstellen eines Segmentierungsbildes für jedes digitale Bild konfiguriert ist, und wobei das Fahrassistenzsystem zum Steuern des Fahrzeugs unter Verwendung der Segmentierungsbilder konfiguriert ist.

## EP 3 796 211 B1

**Revendications**

1. Procédé mis en œuvre par ordinateur d'apprentissage d'un modèle de segmentation, le procédé comprenant :

• le modèle de segmentation traitant une image numérique pour générer une image de segmentation, l'image de segmentation comprenant un segment associé à au moins un objet représenté dans l'image numérique et comprenant un arrière-plan du segment, le segment de l'image de segmentation comprenant une première pluralité de pixels associés à une première pluralité de pixels dans l'image numérique, la première pluralité de pixels de l'image numérique étant associée à l'au moins un objet, et l'arrière-plan du segment de l'image de segmentation comprenant une deuxième pluralité de pixels associée à une deuxième pluralité de pixels de l'image numérique, la deuxième pluralité de pixels de l'image numérique étant associée à un arrière-plan de l'au moins un objet ;
• la génération d'un arrière-plan de l'image numérique en utilisant l'arrière-plan de l'image de segmentation et de l'image numérique, l'arrière-plan de l'image numérique comprenant la deuxième pluralité de pixels de l'image numérique ;
• la détermination d'une prévisibilité de l'image numérique à partir du segment de l'image de segmentation, comprenant

   ◦ la détermination d'une prévisibilité de l'arrière-plan de l'image numérique à partir du segment d'image numérique de l'image numérique,
   ◦ la détermination de la prévisibilité de l'arrière-plan de l'image numérique à partir du segment d'image numérique de l'image numérique comprenant :

      ■ la génération d'un arrière-plan d'une image numérique supplémentaire en utilisant l'arrière-plan de l'image de segmentation et de l'image numérique supplémentaire, l'arrière-plan de l'image numérique supplémentaire comprenant une troisième pluralité de pixels dans l'image numérique supplémentaire étant déterminé par le produit de Hadamard de l'image de segmentation et de l'image supplémentaire ;
      ■ la génération d'une image numérique combinée en utilisant le segment d'image numérique de l'image numérique et l'arrière-plan de l'image numérique supplémentaire, l'image numérique combinée comprenant la première pluralité de l'image numérique et la troisième pluralité de pixels de l'image numérique supplémentaire ;
      ■ un modèle discriminant déterminant une probabilité pour l'image numérique combinée d'appartenir à une classe comprenant l'image numérique et l'image numérique supplémentaire ;

• l'apprentissage du modèle de segmentation afin d'augmenter la probabilité déterminée par le modèle discriminant.

2. Dispositif d'apprentissage, configuré pour réaliser le procédé selon la revendication 1.

3. Système, comprenant :

un dispositif selon la revendication 2 ;
au moins un capteur, configuré pour fournir une image numérique au dispositif.

4. Véhicule, comprenant :

au moins un capteur d'imagerie, configuré pour fournir des images numériques ;
un système d'aide à la conduite, comprenant un modèle de segmentation appris par le procédé selon la revendication 1, le modèle de segmentation étant configuré pour fournir une image de segmentation pour chaque image numérique, et le système d'aide à la conduite étant configuré pour commander le véhicule à l'aide des images de segmentation.

# FIG. 1

FIG. 2

EP 3 796 211 B1

FIG. 3

EP 3 796 211 B1

FIG. 4

EP 3 796 211 B1

# FIG. 5

EP 3 796 211 B1

# FIG. 6

FIG. 7

# FIG. 8

800

802

804

806

EP 3 796 211 B1

# FIG. 9

900

# FIG. 10

1000

1002    1004

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARANDJELOVIC et al.** Object Discovery with a Copy-Pasting GAN. *arXiv:1905.11369*, 2019
- A novel framework for semantic segmentation with generative adversarial network. **XINMING ZHANG et al.** INTERNET MULTIMEDIA COMPUTING AND SERVICE. ACM, 17 August 2018, 1-6
- SegGAN: Semantic Segmentation with Generative Adversarial Network. **ZHANG XINMING et al.** 2018 IEEE FOURTH INTERNATIONAL CONFERENCE ON MULTIMEDIA BIG DATA (BIGMM). IEEE, 13 September 2018, 1-5

- ST-GAN: Spatial Transformer Generative Adversarial Networks for Image Compositing. **LIN CHEN-HSUAN et al.** 2018 IEEE/CVF CONFERENCE ON COMPUTER VISION AND PATTERN RECOGNITION. IEEE, 18 June 2018, 9455-9464
- Spatial Fusion GAN for Image Synthesis. **FANG-FENG ZHAN et al.** ARXIV.ORG. CORNELL UNIVERSITY LIBRARY, 14 December 2018
- **REMEZ TAL et al.** Learning to Segment via Cut-and-Paste. *SAT 2015 18TH INTERNATIONAL CONFERENCE, AUSTIN, TX, USA*, 06 October 2018